(19) **Europäisches Patentamt / European Patent Office / Office européen des brevets**

(11) **EP 3 153 560 A1**

(12) # EUROPEAN PATENT APPLICATION
published in accordance with Art. 153(4) EPC

(43) Date of publication:
**12.04.2017 Bulletin 2017/15**

(21) Application number: **15803231.8**

(22) Date of filing: **25.05.2015**

(51) Int Cl.:
***C09K 5/04*** *(2006.01)*

(86) International application number:
**PCT/JP2015/064942**

(87) International publication number:
**WO 2015/186558 (10.12.2015 Gazette 2015/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **06.06.2014 JP 2014118164**

(71) Applicant: **Asahi Glass Company, Limited Tokyo 100-8405 (JP)**

(72) Inventors:
• **FUKUSHIMA, Masato**
  **Tokyo 100-8405 (JP)**
• **KAWAGUCHI, Satoshi**
  **Tokyo 100-8405 (JP)**

(74) Representative: **Müller-Boré & Partner Patentanwälte PartG mbB Friedenheimer Brücke 21 80639 München (DE)**

(54) **WORKING MEDIUM FOR HEAT CYCLE, COMPOSITION FOR HEAT CYCLE SYSTEM, AND HEAT CYCLE SYSTEM**

(57)     To provide a working fluid for heat cycle which can be used as an alternative to R410A, which has a small composition change, which has a small temperature glide and which is excellent in the cycle performance (capacity), a composition for a heat cycle system, and a heat cycle system employing the composition.

A working fluid for heat cycle containing an azeotropic-like composition consisting of HFO-1132(E) and HFC-32 and/or HFC-125.

Fig. 1

Gas-liquid equilibrium of HFO-1132(E)+HFC-32

HFO-1132(E) gaseous phase concentration [mass%]

HFO-1132(E) liquid phase concentration [mass%]

EP 3 153 560 A1

**Description**

TECHNICAL FIELD

The present invention relates to a working fluid for heat cycle, a composition for a heat cycle system, and a heat cycle system.

BACKGROUND ART

As a heat cycle system to be employed for e.g. a refrigerating apparatus, an air-conditioning apparatus, a power generation system (such as exhaust heat recovery power generation) or a latent heat transport apparatus (such as a heat pipe), one employing as the working fluid hydrofluorocarbon (hereinafter referred to as HFC) which has less influence over the ozone layer, has been known. For example, R410A (an azeotropic-like mixture refrigerant of difluoromethane (HFC-32) and pentafluoroethane (HFC-125) in a mass ratio of 1:1) is a refrigerant which has been widely used. However, it is pointed out that HFCs may cause global warming. Accordingly, development of a working fluid which has less influence over the ozone layer and has a low global warming potential (GWP) is an urgent need. In this specification, abbreviated names of halogenated hydrocarbon compounds are described in brackets after the compound names, and in this specification, the abbreviated names are employed instead of the compound names as the case requires. Further, (E) or (Z) before the compound name or after the abbreviated name of the compound represents trans-form (E-form) or cis-form (Z-form) of stereoisomers.

As a heat cycle system employing a working fluid which has less influence over the ozone layer and which has less influence over global warming, a heat cycle system employing a hydrofluoroolefin (hereinafter referred to as HFO) has been proposed. A HFO has less influence over the ozone layer and in addition, has less influence over global warming since it has a carbon-carbon double bond which is likely to be decomposed by OH radicals in the air.

Specifically, the following heat cycle systems (1) to (3) may be mentioned.

(1) A heat cycle system which employs a working fluid containing 3,3,3-trifluoropropene (HFO-1243zf), 1,3,3,3-tetrafluoropropene (HFO-1234ze), 2-fluoropropene (HFO-1261yf), 2,3,3,3-tetrafluoropropene (HFO-1234yf), 1,1,2-trifluoropropene (HFO-1243yc) or the like (for example, Patent Document 1).

(2) A heat cycle system which employs a working fluid containing 1,2,3,3,3-pentafluoropropene (HFO-1225ye), trans-1,3,3,3-tetrafluoropropene (HFO-1234ze(E)), cis-1,3,3,3-tetrafluoropropene (HFO-1234ze(Z)), HFO-1234yf or the like (for example, Patent Document 2).

(3) A heat cycle system which employs a working fluid containing trans-1,2-difluoroethylene (HFO-1132(E)) or cis-1,2-difluoroethylene (HFO-1132(Z)) (for example, Patent Document 3).

However, each of the heat cycle systems (1) and (2) is insufficient in the cycle performance (capacity).

Further, in general, when a non-azeotropic composition is used as a working fluid, when the working fluid is put into a refrigerator or an air-conditioning apparatus as a heat cycle system apparatus from a pressure container in which the working fluid is contained for storage or for transport, or when it leaks out from a refrigerator or an air-conditioning apparatus, it may undergo a composition change. Further, if the composition of the working fluid has changed, it is difficult to recover the working fluid to the initial composition. Accordingly, when the non-azeotropic composition is used as a working fluid, the working fluid is hardly controllable. Further, when a non-azeotropic composition is used as the working fluid, the temperature glide tends to be large.

PRIOR ART DOCUMENTS

PATENT DOCUMENTS

Patent Document 1: JP-A-4-110388
Patent Document 2: JP-A-2006-512426
Patent Document 3: WO2012/157765

DISCLOSURE OF INVENTION

TECHNICAL PROBLEM

The present invention is to provide a working fluid for heat cycle, which can be used as an alternative to R410A, which has a small composition change, which has a small temperature glide and which is excellent in the cycle performance (capacity), a composition for a heat cycle system, and a heat cycle system employing the composition.

SOLUTION TO PROBLEM

The present invention provides the following working fluid for heat cycle, composition for a heat cycle system, and heat cycle system.

[1] A working fluid for heat cycle, which contains an azeotropic-like composition consisting of HFO-1132(E), and HFC-32 and/or HFC-125.
[2] The working fluid for heat cycle according to [1], wherein the azeotropic-like composition is a composition having a relative volatility within a range of $1.00 \pm 0.40$.
[3] The working fluid for heat cycle according to [1] or [2], wherein the azeotropic-like composition contains HFO-1132(E) in an amount of from 1 to 99 mass% and HFC-32 and HFC-125 in a total amount of from 99 to 1 mass%.
[4] The working fluid for heat cycle according to any one of [1] to [3], wherein the azeotropic-like composition consists of HFO-1132(E) and HFC-32.
[5] The working fluid for heat cycle according to any one of [1] to [3], wherein the azeotropic-like composition consists of HFO-1132(E) and HFC-125.
[6] The working fluid for heat cycle according to any one of [1] to [3], wherein the azeotropic-like composition consists of HFO-1132(E), HFC-32 and HFC-125.
[7] The working fluid for heat cycle according to any one of [1] to [6], wherein the proportion of the azeotropic-like composition is at least 50 mass% based on the entire amount of the working fluid for heat cycle.
[8] The working fluid for heat cycle according to any one of [1] to [7], wherein the proportion of HFO-1132(E) is at most 80 mass% based on the entire amount of the working fluid for heat cycle.
[9] The working fluid for heat cycle according to any one of [1] to [8], wherein the proportion of HFO-1132(E) is at least 20 mass% based on the entire amount of the working fluid for heat cycle.
[10] The working fluid for heat cycle according to any one of [1] to [9], which is composed of the azeotropic-like composition.
[11] A composition for a heat cycle system, which contains the working fluid for heat cycle as defined in any one of [1] to [10], and a refrigerant oil.
[12] A heat cycle system, which employs the composition for a heat cycle system as defined in [11].
[13] The heat cycle system according to [12], which is a refrigerating apparatus, an air-conditioning apparatus, a power generation system, a heat transport apparatus or a secondary cooling machine.
[14] The heat cycle system according to [13], which is a room air-conditioner, a store package air-conditioner, a building package air-conditioner, a plant package air-conditioner, a gas engine heat pump, a train air-conditioning system, an automobile air-conditioning system, a built-in showcase, a separate showcase, an industrial fridge freezer, an ice making machine or a vending machine.

ADVANTAGEOUS EFFECTS OF INVENTION

According to the present invention, it is possible to provide a working fluid for heat cycle and a composition for a heat cycle system, which can be used as an alternative to R410A, which have a small composition change, which have a small temperature glide and which can be employed for a heat cycle system excellent in the cycle performance (capacity). Further, it is possible to provide a heat cycle system which is excellent in the cycle performance (capacity).

BRIEF DESCRIPTION OF DRAWINGS

Fig. 1 is a vapor-liquid equilibrium graph of a composition consisting of HFO-1132(E) and HFC-32.
Fig. 2 is a vapor-liquid equilibrium graph of a composition consisting of HFO-1132(E) and HFC-125.
Fig. 3 is a schematic construction view illustrating an example of a refrigerating cycle system.
Fig. 4 is a cycle diagram illustrating the state change of a working fluid for heat cycle in a refrigerating cycle system on a pressure-enthalpy diagram.

DESCRIPTION OF EMBODIMENTS

Now, the present invention will be described in detail.

[Working fluid for heat cycle]

The working fluid for heat cycle of the present invention is a working fluid for heat cycle containing an azeotropic-like composition consisting of HFO-1132(E), and HFC-32 and/or HFC-125.

Hereinafter, "the azeotropic-like composition consisting of HFO-1132(E), and HFC-32 and/or HFC-125" in the present invention will be referred to as "the present azeotropic-like composition". Further, among the present azeotropic-like compositions, "an azeotropic composition consisting of HFO-1132(E), and HFC-32 and/or HFC-125" will be referred to as "the present azeotropic composition".

In this specification, an azeotropic composition is a composition in a vapor-liquid equilibrium state of a mixed liquid of at least two components, in which the compositions of the vapor phase and the liquid phase are the same, and an azeotropic-like composition is a composition which exhibits behavior substantially the same as the above behavior of an azeotropic composition in a vapor-liquid equilibrium state. Since an azeotropic-like composition can be handled the same as an azeotropic composition, in this specification, an azeotropic-like composition includes an azeotropic composition.

(Azeotropic composition)

The present azeotropic composition has a relative volatility of 1.00 represented by the following formula.

(Formula to determine relative volatility)

Relative volatility=(mass% of HFO-1132(E) in a vapor phase portion/total mass% of HFC-32 and HFC-125 in a vapor phase portion)/(mass% of HFO-1132(E) in a liquid phase portion/total mass% of HFC-32 and HFC-125 in a liquid phase portion)

The above relative volatility may be obtained by measuring the compositions of the vapor phase and the liquid phase of the mixture of HFO-1132(E), and HFC-32 and/or HFC-125. For example, the relative volatility of an azeotropic composition of HFO-1132(E) and HFC-32 is obtained, specifically, by the following method.

(Test 1 to determine azeotropic composition)

HFO-1132(E) and HFC-32 at predetermined concentrations were put in a pressure resistant container at 25°C, followed by stirring, and they were left at rest until a vapor-liquid equilibrium state was achieved. Then, the vapor phase and the liquid phase in the pressure resistant container were collected, and their compositions were analyzed by gas chromatography. Further, the relative volatility was determined in accordance with the above-described formula to determine the relative volatility from the composition ratio of them. The results are shown in Table 1.

TABLE 1

| Liquid phase [mass%] | | Vapor phase [mass%] | | Relative volatility |
|---|---|---|---|---|
| HFO-1132(E) | HFC-32 | HFO-1132(E) | HFC-32 | |
| 10 | 90 | 12 | 88 | 1.23 |
| 20 | 80 | 22 | 78 | 1.13 |
| 30 | 70 | 30 | 70 | 1.00 |
| 40 | 60 | 39 | 61 | 0.96 |
| 50 | 50 | 47 | 53 | 0.89 |
| 60 | 40 | 55 | 45 | 0.81 |
| 70 | 30 | 64 | 36 | 0.76 |
| 80 | 20 | 74 | 26 | 0.71 |

(continued)

| Liquid phase [mass%] | | Vapor phase [mass%] | | Relative volatility |
|---|---|---|---|---|
| HFO-1132(E) | HFC-32 | HFO-1132(E) | HFC-32 | |
| 90 | 10 | 85 | 15 | 0.63 |

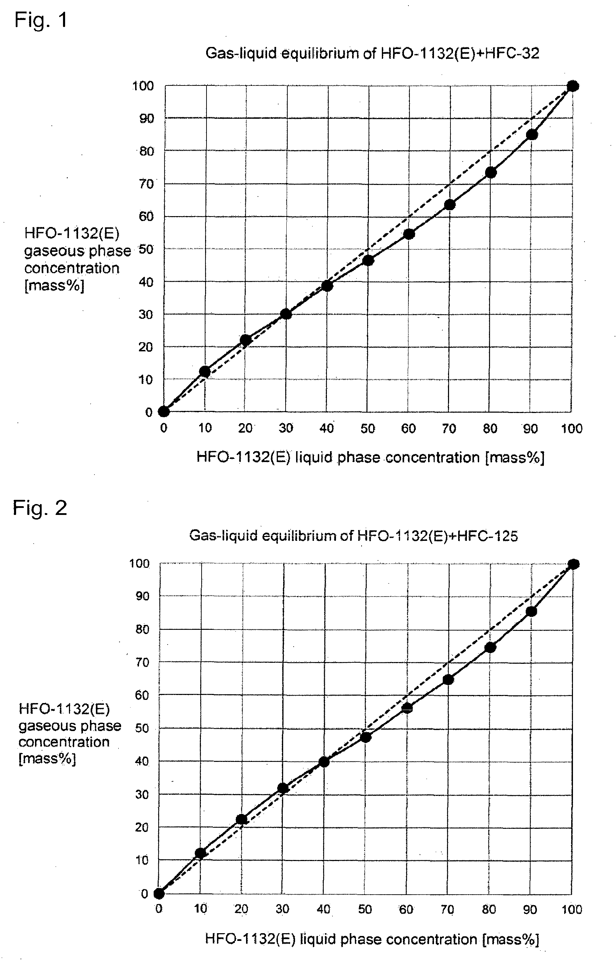

Further, based on the results in Table 1, the vapor-liquid equilibrium graph of a composition consisting of HFO-1132(E) and HFC-32 was prepared, which is shown in Fig. 1. Fig. 1 is a graph illustrating the relation between the liquid phase concentration (mass%) and the vaporphase concentration (mass%) of HFO-1132(E) in a vapor-liquid equilibrium state of mixtures of HFO-1132(E) and HFC-32 with various compositions. In Fig. 1, the solid line indicates the relation between the liquid phase concentration (mass%) and the vaporphase concentration (mass%) of HFO-1132(E) measured above, and the broken line represents a straight line with a relative volatility of 1.00 at which the compositions in the vaporphase and in the liquid phase agree with each other. In Fig. 1, the intersection point of the curve represent by the solid line and the straight line represented by the broken line indicates the azeotropic composition of HFO-1132(E):HFC-32=30 mass%:70 mass%.

(Azeotropic-like composition)

Further, it is found from Fig. 1 that of the composition consisting of HFO-1132(E) and HFC-32, the relation between the liquid phase concentration (mass%) and the vaporphase concentration (mass%) in a vapor-liquid equilibrium state approximates to the straight line with a relative volatility of 1.00 represented by the broken line within a range of HFO-1132(E) of from 1 to 99 mass%. According to the above measurement results, the present azeotropic-like composition consisting of HFO-1132(E) and HFC-32 has a relative volatility within a range of 1.00±0.40 with a mass ratio of HFO-1132(E) to HFC-32 (HFO-1132(E) [mass%]/HFC-32 [mass%]) of from 1/99 to 99/1.

(Test 2 to determine azeotropic composition)

Further, with respect to a composition consisting of HFO-1132(E) and HFC-125, the test was conducted in the same manner as Test 1 to determine the azeotropic composition, and the relative volatility was obtained in accordance with the above-described formula to determine relative volatility from the composition ratio of the two components. The results are shown in Table 2.

TABLE 2

| Liquid phase [mass%] | | Vapor phase [mass%] | | Relative volatility |
|---|---|---|---|---|
| HFO-1132(E) | HFC-125 | HFO-1132(E) | HFC-125 | |
| 10 | 90 | 12 | 88 | 1.23 |
| 20 | 80 | 23 | 77 | 1.19 |
| 30 | 70 | 32 | 68 | 1.10 |
| 40 | 60 | 40 | 60 | 1.00 |
| 50 | 50 | 48 | 52 | 0.92 |
| 60 | 40 | 56 | 44 | 0.85 |
| 70 | 30 | 65 | 35 | 0.80 |
| 80 | 20 | 75 | 25 | 0.75 |
| 90 | 10 | 86 | 14 | 0.68 |

Further, based on the results in Table 2, a vapor-liquid equilibrium graph of a composition consisting of HFO-1132(E) and HFC-125 was prepared, which is shown in Fig. 2. Fig. 2 is a graph illustrating the relation between the liquid phase concentration (mass%) and the vaporphase concentration (mass%) of HFO-1132(E) in a vapor-liquid equilibrium state of mixtures of HFO-1132(E) and HFC-125 with various compositions. In Fig. 2, the solid line indicates the relation between the liquid phase concentration (mass%) and the vaporphase concentration (mass%) of HFO-1132(E) measured above, and the broken line represents a straight line with a relative volatility of 1.00 at which the compositions of the vaporphase and the liquid phase agree with each other. In Fig. 2, the intersection point of the curve represented by the solid line and the straight line represented by the broken line indicates the azeotropic composition of HFO-1132(E):HFC-125=40 mass%:60 mass%.

(Azeotropic-like composition)

Further, from Fig. 2, it is found that of the composition consisting of HFO-1132(E) and HFC-125, the relation between the liquid phase concentration (mass%) and the vaporphase concentration (mass%) in a vapor-liquid equilibrium state approximates to the straight line with a relative volatility of 1.00 represented by the broken line, within a range of HFO-1132(E) of from 1 to 99 mass%. According to the above measurement results, the azeotropic-like composition consisting of HFO-1132(E) and HFC-125 has a relative volatility within a range of $1.00 \pm 0.40$ with a mass ratio of HFO-1132(E) to HFC-32 (HFO-1132(E) [mass%]/HFC-32 [mass%]) of from 1/99 to 99/1.

Further, HFO-1132(E), HFC-32 and HFC-125 have boiling points close to one another and have similar physical properties. The temperature glide of the working fluid for heat cycle consisting of three components of HFO-1132(E), HFC-32 and HFC-125 approximates to the temperature glide of a working fluid for heat cycle consisting of two components of HFO-1132(E) and HFC-32 or HFC-125 as shown in the after-described Examples. As described hereinafter, the temperature glide is a factor which reflects the azeotropic-like composition, and a composition having a temperature glide of at most 1.50 may be considered as an azeotropic-like composition. Accordingly, a composition consisting of HFO-1132(E), HFC-32 and HFC-125 also forms an azeotropic-like composition with a mass ratio of HFO-1132(E) to HFC-125 and HFC-32 ((HFO-1132(E) [mass%])/(HFC-125 [mass%]+HFC-32 [mass%])) of from 1/99 to 99/1 in the same manner as a composition consisting of HFO-1132(E), and HFC-32 or HFC-125. With respect to the boiling points of HFO-1132(E), HFC-32 and HFC-125, as values measured under a pressure of $1.013 \times 10^5$ Pa, the boiling point of HFO-1132(E) is -50°C, the boiling point of HFC-32 is -52°C, and the boiling point of HFC-125 is -48°C.

Considering the above results, for the working fluid for heat cycle of the present invention, as the present azeotropic-like composition, a composition having a content of HFO-1132(E) of from 1 to 99 mass% and a total content of HFC-32 and HFC-125 of from 99 to 1 mass% was selected.

When the present azeotropic-like composition has a proportion of HFO-1132(E) to the total content of HFC-32 and HFC-125 within the above range, a working fluid for heat cycle in which the difference in the composition ratio between the vaporphase and the liquid phase is very small and which is excellent in the stability of the composition can be obtained. Further, when the working fluid for heat cycle of the present invention is employed for a heat cycle system, the composition change at the time of filling or at the time of leakage from an apparatus is very small, whereby very stable cycle performance will be obtained. Therefore, it is easily to control the working fluid for heat cycle, the efficiency can be more increased while a certain capacity is maintained, whereby favorable cycle performance will be obtained.

Further, as one of indices to properties when a mixture is used as a working fluid, "the temperature glide" is employed. The temperature glide is defined as properties such that the initiation temperature and the completion temperature of evaporation in an evaporator or of condensation in a condenser, for example, as the heat exchanger, differ from each other. Since the working fluid for heat cycle of the present invention contains the present azeotropic-like composition, its temperature glide is close to 0. Accordingly, when the working fluid of the present invention is employed for a heat cycle system, as described hereinafter, a heat cycle system with a good energy efficiency can be obtained.

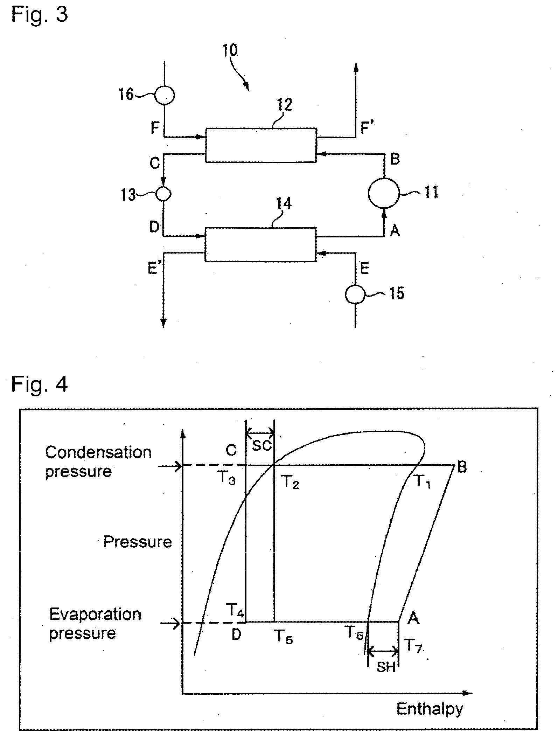

The influence of the temperature glide in a heat cycle system when the azeotropic-like composition is employed as a working fluid will be described with reference to a case where the azeotropic-like composition is employed for a heat cycle system shown in Fig. 3.

Fig. 3 is a schematic construction view illustrating an example of a refrigerating cycle system of the present invention. A refrigerating cycle system 10 is a system generally comprising a compressor 11 to compress a working fluid vapor A to form a high temperature/high pressure working fluid vapor B, a condenser 12 to cool and liquefy the working fluid vapor B discharged from the compressor 11 to form a low temperature/high pressure working fluid C, an expansion valve 13 to let the working fluid C discharged from the condenser 12 expand to form a low temperature/low pressure working fluid D, an evaporator 14 to heat the working fluid D discharged from the expansion valve 13 to form a high temperature/low pressure working fluid vapor A, a pump 15 to supply a load fluid E to the evaporator 14, and a pump 16 to supply a fluid F to the condenser 12.

In the refrigerating cycle system 10, the temperature of the working fluid increases from an inlet toward an outlet of the evaporator 14 at the time of evaporation, and on the contrary, the temperature decreases from an inlet toward an outlet of the condenser 12 at the time of condensation. In the refrigerating cycle system 10, in the evaporator 14 and the condenser 12, such is achieved by heat exchange between the working fluid and a heat source fluid such as water or the air flowing to face the working fluid. The heat source fluid is represented, in the refrigerating cycle system 10, by "E→E'" in the evaporator 14 and by "F→F'" in the condenser 12.

Here, when a working fluid having a single composition, which has no temperature glide, is employed, the temperature difference between the outlet temperature and the inlet temperature of the evaporator 14 is substantially constant.

Further, since the azeotropic composition undergoes substantially no composition change when evaporated and condensed repeatedly, it can be treated substantially the same as a working fluid having a single composition, when used as a working fluid. Further, the azeotropic-like composition undergoes a small change of composition when evaporated and condensed repeatedly and can be treated the same as the azeotropic composition. Accordingly, even when the azeotropic composition or the azeotropic-like composition is used as a working fluid, the temperature difference between the outlet temperature and the inlet temperature of the evaporator 14 is substantially constant.

Whereas, when a non-azeotropic composition is used, the temperature difference will not be constant. For example, when the non-azeotropic composition is to be evaporated at 0°C in the evaporator 14, the inlet temperature is lower than 0°C, and frosting is likely to occur in the evaporator 14. Particularly when the temperature glide is larger, the inlet temperature is lower and frosting is more likely to occur.

Further, for example, as shown in the above refrigerating cycle system 10, usually, in a heat cycle system, the heat exchange efficiency is to be improved by making the working fluid and the heat source fluid such as water or the air flowing in heat exchangers such as the evaporator 14 or the condenser 12 flow in counter-current flow. Here, except for at the time of startup, the temperature difference of the heat source fluid is usually small in a stable operation state during long term operation. Accordingly, with a non-azeotropic composition which has significantly different compositions in a vaporphase and in a liquid phase, since its temperature glide is large, it is difficult to obtain a heat cycle system with a good energy efficiency. Whereas, in a case where an azeotropic composition is used as a working fluid, it is possible to obtain a heat cycle system with a good energy efficiency.

Further, in a case where a non-azeotropic composition of which the compositions in a vaporphase and in a liquid phase are very different from each other is used for the refrigerating cycle system 10, if the non-azeotropic composition circulating in the system 10 leaks out, the composition of the non-azeotropic composition circulating in the system 10 may significantly change as between before and after the leakage.

The content of HFO-1132(E) in the working fluid for heat cycle of the present invention is preferably at most 80 mass% based on the entire amount of the working fluid for heat cycle.

HFO-1132(E) is known to explode at high temperature or with an ignition source under high pressure when used alone, that is, to have so-called self-decomposition property. The working fluid for heat cycle of the present invention is a mixture of HFO-1132(E) with HFC-32 and/or HFC-125 with a lowered content of HFO-1132(E), whereby the self-decomposition reaction can be prevented. Here, as disclosed in the after-mentioned Examples, when the content of HFO-1132(E) in the present azeotropic-like composition is adjusted to be at most 80 mass%, the composition has no self-decomposition property under temperature and pressure conditions under which the composition is applied for a heat cycle system, whereby a working fluid for heat cycle having higher safety can be obtained. Further, also in a case where the working fluid for heat cycle of the present invention contains the after-described optional component in addition to the present azeotropic-like composition, by the content of HFO-1132(E) being at most 80 mass%, the composition has no self-decomposition property under temperature and pressure conditions under which it is applied for a heat cycle system, whereby a working fluid for heat cycle having high safety can be obtained. In order to achieve higher safety, the content of HFO-1132(E) is more preferably at most 60 mass%.

The working fluid for heat cycle of the present invention, even having a composition with self-decomposition property, may be used for a heat cycle system with careful handling depending upon the conditions of use.

The proportion of HFO-1132(E) based on the entire amount of the working fluid for heat cycle of the present invention is preferably at least 20 mass%, more preferably at least 40 mass%. As the cycle performance of a working fluid, coefficient of performance and the refrigerating capacity are mentioned, and by the working fluid for heat cycle of the present invention containing HFO-1132(E) in a proportion of at least 20 mass%, it is possible to obtain cycle performance equal to or higher than the coefficient of performance and the refrigerating capacity based on R410A (1.000).

The content of the present azeotropic-like composition in the working fluid for heat cycle of the present invention is preferably at least 50 mass%, more preferably at least 60 mass%, further preferably 80 mass% based on the entire amount of the working fluid for heat cycle. It is particularly preferred that the working fluid for heat cycle of the present invention is composed of the present azeotropic-like composition.

The working fluid for heat cycle of the present invention, which contains the present azeotropic-like composition in an amount of at least 50 mass%, is excellent in the cycle performance, and has smaller composition change and temperature glide. When the working fluid for heat cycle of the present invention consists solely of the present azeotropic-like composition, the working fluid for heat cycle has a composition change and a temperature glide substantially close to 0.

(Optional component)

The working fluid for heat cycle of the present invention may optionally contain a compound commonly used as a working fluid, in addition to the present azeotropic-like composition of the present invention, within a range not to decrease the effects of the present invention.

The compound which the working fluid for heat cycle of the present invention may optionally contain in addition to the present azeotropic-like composition (hereinafter referred to as an optional component) may be a HFO other than HFO-1132(E), a HFC having a carbon-carbon double bond other than HFC-32, a hydrocarbon, a HCFO or a CFO.

In the working fluid for heat cycle of the present invention, the total content of the optional component is preferably at most 20 mass%, preferably at most 10 mass% in the working fluid for heat cycle (100 mass%). If the content of the optional component exceeds 20 mass%, the refrigerant controllability may be decreased, that is, when the working fluid is used for e.g. a refrigerant, if the working fluid leaks out from a heat cycle apparatus, the composition change of the working fluid for heat cycle may be large.

(HFO other than HFO-1132(E))

The HFO other than HFO-1132(E), which the working fluid for heat cycle of the present invention may contain, may, for example, be cis-1,2-difluoroethylene (HFO-1132(Z)), HFO-1261yf, HFO-1243yc, trans-1,2,3,3,3-pentafluoropropene (HFO-1225ye(E)), cis-1,2,3,3,3-pentafluoropropene (HFO-1225ye(Z)), HFO-1234ze(E), HFO-1234ze(Z) or HFO-1243zf. The HFO may be used alone or in combination of two or more.

In a case where the working fluid for heat cycle of the present invention contains a HFO other than HFO-1132(E), the content is preferably from 1 to 20 mass%, more preferably from 2 to 10 mass% in the working fluid for heat cycle (100 mass%).

(HFC other than HFC-32 and HFC-125)

A HFC is a component which improves the cycle performance (capacity) of a heat cycle system. The HFC other than HFC-32 and HFC-125 which the working fluid for heat cycle of the present invention may contain, may, for example, be tetrafluoroethane, difluoroethane, trifluoroethane, pentafluoropropane, hexafluoropropane, heptafluoropropane, pentafluorobutane or heptafluorocyclopentane. The HFC may be used alone or in combination of two or more.

The HFC is particularly preferably 1,1,1,2-tetrafluoroethane (HFC-134a) or 1,1-difluoroethane (HFC-152a), in view of less influence over the ozone layer and less influence over global warming.

In a case where the working fluid for heat cycle of the present invention contains a HFC other than HFC-32, the content is preferably from 1 to 20 mass%, more preferably from 2 to 10 mass% in the working fluid for heat cycle (100 mass%). The content of such a HFC may be controlled depending upon the required properties of the working fluid for heat cycle.

(Hydrocarbon)

The hydrocarbon may, for example, be propane, propylene, cyclopropane, butane, isobutane, pentane or isopentane.

The hydrocarbon may be used alone or in combination of two or more.

In a case where the working fluid for heat cycle of the present invention contains a hydrocarbon, its content is preferably from 1 to 20 mass%, more preferably from 2 to 5 mass% in the working fluid for heat cycle (100 mass%). When the content of the hydrocarbon is at least 1 mass%, the solubility of the refrigerant oil in the working fluid for heat cycle will sufficiently improve. When the content of the hydrocarbon is at most 20 mass%, the hydrocarbon is effective to suppress combustibility of the working fluid for heat cycle.

(HCFO, CFO)

A HCFO and a CFO are components which improve the solubility of the refrigerant oil in the working fluid for heat cycle. The HCFO may, for example, be hydrochlorofluoropropene or hydrochlorofluoroethylene, and is particularly preferably 1-chloro-2,3,3,3-tetrafluoropropene (HCFO-1224yd) or 1-chloro-1,2-difluoroethylene (HCFO-1122) with a view to sufficiently suppressing combustibility of the working fluid for heat cycle without significantly decreasing the cycle performance (capacity) of the heat cycle system.

The HCFO may be used alone or in combination of two or more.

The CFO may, for example, be chlorofluoropropene or chlorofluoroethylene, and is particularly preferably 1,1-dichloro-2,3,3,3-tetrafluoropropene (CFO-1214ya) or 1,2-dichloro-1,2-difluoroethylene (CFO-1112) with a view to sufficiently suppressing combustibility of the working fluid for heat cycle without significantly decreasing the cycle performance (capacity) of the heat cycle system.

In a case where the working fluid for heat cycle of the present invention contains a HCFO and/or a CFO, the total content is preferably from 1 to 20 mass% in the working fluid for heat cycle (100 mass%). Chlorine atoms have an effect to suppress combustibility, and when the content of the HCFO and the CFO is within such a range, combustibility of the working fluid for heat cycle can be sufficiently suppressed without significantly decreasing the cycle performance (capacity) of the heat cycle system. As the HCFO and the CFO, preferred is a HCFO which has less influence over the ozone layer and which has less influence over global warming.

[Application to heat cycle system]

When the working fluid for heat cycle of the present invention is applied to a heat cycle system, it may be used as a composition for a heat cycle system of the present invention usually as mixed with a refrigerant oil. Further, the composition for a heat cycle system of the present invention may further contain a known additive such as a stabilizer or a leak detecting substance in addition to the above components.

(Refrigerant oil)

As a refrigerant oil, a known refrigerant oil used for a composition for a heat cycle system may be used.
The refrigerant oil may, for example, be an oxygen-containing synthetic oil (such as an ester refrigerant oil or an ether refrigerant oil), a fluorinated refrigerant oil, a mineral oil or a hydrocarbon synthetic oil.
As the ester refrigerant oil, a dibasic acid ester oil, a polyol ester oil, a complex ester oil, a polyol carbonate oil or the like may be mentioned.
The dibasic acid ester oil is preferably an ester of a $C_{5-10}$ dibasic acid (such as glutaric acid, adipic acid, pimelic acid, suberic acid, azelaic acid or sebacic acid) with a $C_{1-15}$ monohydric alcohol which is linear or has a branched alkyl group (such as methanol, ethanol, propanol, butanol, pentanol, hexanol, heptanol, octanol, nonanol, decanol, undecanol, dodecanol, tridecanol, tetradecanol or pentadecanol). It may, for example, be specifically preferably ditridecyl glutarate, di(2-ethylhexyl) adipate, diisodecyl adipate, ditridecyl adipate or di(3-ethylhexyl) sebacate.
The polyol ester oil is preferably an ester of a diol (such as ethylene glycol, 1,3-propanediol, propylene glycol, 1,4-butanediol, 1,2-butanediol, 1,5-pentadiol, neopentyl glycol, 1,7-heptanediol or 1,12-dodecanediol) or a polyol having from 3 to 20 hydroxy groups (such as trimethylolethane, trimethylolpropane, trimethylolbutane, pentaerythritol, glycerin, sorbitol, sorbitan or a sorbitol/glycerin condensate) with a $C_{6-20}$ fatty acid (such as a linear or branched fatty acid such as hexanoic acid, heptanoic acid, octanoic acid, nonanoic acid, decanoic acid, undecanoic acid, dodecanoic acid, eicosanoic acid or oleic acid, or a so-called neo acid having a quaternary a carbon atom).
The polyol ester oil may have a free hydroxy group.
The polyol ester oil is preferably an ester (such as trimethylolpropane tripelargonate, pentaerythritol 2-ethylhexanoate or pentaerythritol tetrapelargonate) of a hindered alcohol (such as neopentyl glycol, trimethylolethane, trimethylolpropane, trimethylolbutane or pentaerythritol).
The complex ester oil is an ester of a fatty acid and a dibasic acid, with a monohydric alcohol and a polyol. The fatty acid, the dibasic acid, the monohydric alcohol and the polyol may be as defined above.
The polyol carbonate oil is an ester of carbonic acid with a polyol.
The polyol may, for example, be the above-described diol or the above-described polyol. Further, the polyol carbonate oil may be a ring-opening polymer of a cyclic alkylene carbonate.
The ether refrigerating oil may be a polyvinyl ether oil or a polyoxyalkylene oil.
The polyvinyl ether oil may be a polymer of a vinyl ether monomer, a copolymer of a vinyl ether monomer and a hydrocarbon monomer having an olefinic double bond, or a copolymer of a vinyl ether monomer and a vinyl ether monomer having a polyoxyalkylene chain.
The vinyl ether monomer is preferably an alkyl vinyl ether such as methyl vinyl ether or ethyl vinyl ether. Further, the vinyl ether monomer having a polyoxyalkylene chain may, for example, be a compound having one of hydroxy groups of a polyoxyalkylene diol alkyl-etherified and the other hydroxy group vinyl-etherified.
The vinyl ether monomer may be used alone or in combination of two or more.
The hydrocarbon monomer having an olefinic double bond may, for example, be ethylene, propylene, various forms of butene, various forms of pentene, various forms of hexene, various forms of heptene, various forms of octene, diisobutylene, triisobutylene, styrene, $\alpha$-methylstyrene or alkyl-substituted styrene. The hydrocarbon monomer having an olefinic double bond may be used alone or in combination of two or more.
The polyvinyl ether copolymer may be either of a block copolymer and a random copolymer.
The polyoxyalkylene oil may, for example, be a polyoxyalkylene monool, a polyoxyalkylene polyol, an alkyl ether of a polyoxyalkylene monool or a polyoxyalkylene polyol, or an ester of a polyoxyalkylene monool or a polyoxyalkylene polyol.
The polyoxyalkylene monool or the polyoxyalkylene polyol may be one obtained by e.g. a method of subjecting a $C_{2-4}$ alkylene oxide (such as ethylene oxide or propylene oxide) to ring-opening addition polymerization to an initiator such as water or a hydroxy group-containing compound in the presence of a catalyst such as an alkali hydroxide. Further, one molecule of the polyoxyalkylene chain may contain single oxyalkylene units or two or more types of oxyalkylene units. It is preferred that at least oxypropylene units are contained in one molecule.

The hydroxy group-containing compound may, for example, be a monohydric or polyhydric alcohol (such as methanol, butanol, ethylene glycol, propylene glycol, 1,4-butanediol, glycerol or pentaerythritol).

The polyoxyalkylene oil is preferably one obtained by alkyl-etherifying all the hydroxy groups of a polyoxyalkylene monool or a polyoxyalkylene diol, which is called a polyalkylene glycol oil (PAG).

The fluorinated refrigerant oil may, for example, be a compound having hydrogen atoms of a synthetic oil (such as the after-mentioned mineral oil or hydrocarbon synthetic oil) substituted by fluorine atoms, a perfluoropolyether oil or a fluorinated silicone oil.

The mineral oil may, for example, be a naphthene mineral oil or a paraffin mineral oil obtained by purifying a refrigerating oil fraction obtained by atmospheric distillation or vacuum distillation of crude oil by a purification treatment (such as solvent deasphalting, solvent extraction, hydrocracking, solvent dewaxing, catalytic dewaxing, hydrotreating or clay treatment) optionally in combination.

The hydrocarbon synthetic oil may, for example, be poly-$\alpha$-olefin, an alkylbenzene or an alkylnaphthalene.

The refrigerant oil may be used alone or in combination of two or more.

The refrigerant oil is preferably a polyol ester oil and a polyoxyalkylene oil in view of the compatibility with the working fluid for heat cycle, and is particularly preferably a polyalkylene glycol oil with a view to obtaining a remarkable antioxidant effect by a stabilizer.

The content of the refrigerant oil in the composition for a heat cycle system is not limited within a range not to remarkably decrease the effects of the present invention and varies depending upon e.g. the application and the form of a compressor, and is usually from 10 to 100 parts by mass, preferably from 20 to 50 parts by mass based on the working fluid for heat cycle (100 parts by mass).

Further, in the composition for a heat cycle system (100 mass%), the content of HFO-1132(E) is preferably at least 5 mass%, more preferably at least 20 mass%, further preferably at least 30 mass%, particularly preferably at least 40 mass%.

(Stabilizer)

The stabilizer is a component which improves the stability of the working fluid for heat cycle against heat and oxidation. The stabilizer may, for example, be an oxidation resistance-improving agent, a heat resistance-improving agent or a metal deactivator.

The oxidation resistance-improving agent and the heat resistance-improving agent may, for example, be N,N'-diphenylphenylenediamine, p-octyldiphenylamine, p,p'-dioctyldiphenylamine, N-phenyl-1-naphthylamine, N-phenyl-2-naphthylamine, N-(p-dodecyl)phenyl-2-naphthylamine, di-1-naphthylamine, di-2-naphthylamine, N-alkylphenothiazine, 6-(t-butyl)phenol, 2,6-di-(t-butyl)phenol, 4-methyl-2,6-di-(t-butyl)phenol or 4,4'-methylenebis(2,6-di-t-butylphenol). The oxidation resistance-improving agent and the heat resistance-improving agent may be used alone or in combination of two or more.

The metal deactivator may, for example, be imidazole, benzimidazole, 2-mercaptobenzothiazole, 2,5-dimercaptothiadiazole, salicylidene-propylenediamine, pyrazole, benzotriazole, tritriazole, 2-methylbenzimidazole, 3,5-dimethylpyrazole, methylenebis-benzotriazole, an organic acid or an ester thereof, a primary, secondary or tertiary aliphatic amine, an amine salt of an organic acid or inorganic acid, a heterocyclic nitrogen-containing compound, an amine salt of an alkyl phosphate, or a derivative thereof.

The content of the stabilizer is not limited within a range not to remarkably decrease the effects of the present invention, and is usually at most 5 mass%, preferably at most 1 mass% in the composition for a heat cycle system (100 mass%).

(Leak detecting substance)

The leak detecting substance may, for example, be an ultraviolet fluorescent dye, an odor gas or an odor masking agent.

The ultraviolet fluorescent dye may be known ultraviolet fluorescent dyes, such as dyes as disclosed in e.g. US Patent No. 4,249,412, JP-A-10-502737, JP-A-2007-511645, JP-A-2008-500437 and JP-A-2008-531836.

The odor masking agent may be known perfumes such as perfumes as disclosed in e.g. JP-A-2008-500437 and JP-A-2008-531836.

In a case where the leak detecting substance is used, a solubilizing agent which improves the solubility of the leak detecting substance in the working fluid for heat cycle may be used.

The solubilizing agent may be ones as disclosed in e.g. JP-A-2007-511645, JP-A-2008-500437 and JP-A-2008-531836.

The content of the leak detecting substance is within a range not to remarkably decrease the effects of the present invention, and is usually at most 2 mass%, preferably at most 0.5 mass% in the composition for a heat cycle system (100 mass%).

(Other compound)

The composition for a heat cycle system of the present invention may contain a compound used as a conventional working fluid, refrigerant or heat transfer fluid (hereinafter referred to as other compound).
As such other compound, the following compounds may be mentioned.
Fluorinated ether: (Perfluoropropyl)methyl ether ($C_3F_7OCH_3$), (perfluorobutyl)methyl ether ($C_4F_9OCH_3$), (perfluorobutyl)ethyl ether ($C_4F_9OC_2H_5$), 1,1,2,2-tetrafluoroethyl-2,2,2-trifluoroethyl ether ($CF_2HCF_2OCH_2CF_3$, manufactured by Asahi Glass Company, Limited, AE-3000), etc.
The content of such other compound is not limited within a range not to remarkably decrease the effects of the present invention, and is usually at most 30 mass%, preferably at most 20 mass%, more preferably at most 15 mass% in the composition for a heat cycle system (100 mass%).

(Advantageous effects)

The working fluid for heat cycle and the composition for a heat cycle system of the present invention, which contains an azeotropic-like composition consisting of HFO-1132(E) and HFC-32 and/or HFC-125, can be used as an alternative to R410A, have little composition change, have a small temperature glide, and can provide favorable cycle performance (capacity).

(Refrigerating cycle system)

As a heat cycle system to which the composition for a heat cycle system of the present invention is applied, a heat cycle system by a heat exchanger such as a condenser or an evaporator may be used without any particular restriction. The heat cycle system, for example, a refrigerating cycle system, has a mechanism in which a gaseous working fluid is compressed by a compressor and cooled by a condenser to form a high pressure liquid, the pressure of the liquid is lowered by an expansion valve, and the liquid is vaporized at low temperature by an evaporator so that heat is removed by the heat of vaporization.
A refrigerating cycle system as an example of a heat cycle system will be described with reference to Fig. 3.
In the refrigerating cycle system 10, the following cycle is repeated.

(i) A working fluid vapor A discharged from an evaporator 14 is compressed by a compressor 11 to form a high temperature/high pressure working fluid vapor B.
(ii) The working fluid vapor B discharged from the compressor 11 is cooled and liquefied by a fluid F in a condenser 12 to form a low temperature/high pressure working fluid C. At that time, the fluid F is heated to form a fluid F', which is discharged from the condenser 12.
(iii) The working fluid C discharged from the condenser 12 is expanded in an expansion valve 13 to form a low temperature/low pressure working fluid D.
(iv) The working fluid D discharged from the expansion valve 13 is heated by a load fluid E in the evaporator 14 to form a high temperature/low pressure working fluid vapor A. At that time, the load fluid E is cooled and becomes a load fluid E', which is discharged from the evaporator 14.

The refrigerating cycle system 10 is a cycle system comprising an adiabatic isentropic change, an isenthalpic change and an isobaric change. The state change of the working fluid as represented on a pressure-enthalpy diagram may be represented as a trapezoid having points A, B, C and D as vertexes, as shown in Fig. 4.
The AB process is a process wherein adiabatic compression is carried out by the compressor 11 to change the high temperature/low pressure working fluid vapor A to a high temperature/high pressure working fluid vapor B, and is represented by the line AB in Fig. 4. As described hereinafter, the working fluid vapor A is introduced to the compressor 11 in a superheated state, and the obtained working fluid vapor B is also a vapor in a superheated state.
The BC process is a process wherein isobaric cooling is carried out in the condenser 12 to change the high temperature/high pressure working fluid vapor B to a low temperature/high pressure working fluid C and is represented by the BC line in Fig. 4. The pressure in this process is the condensation pressure. Of the two intersection points of the pressure-enthalpy diagram and the BC line, the intersection point $T_1$ on the high enthalpy side is the condensing temperature, and the intersection point $T_2$ on the low enthalpy side is the condensation boiling point temperature. Here, in a case where the working fluid is a non-azeotropic composition, the temperature glide is represented by the difference between $T_1$ and $T_2$.

The CD process is a process wherein isenthalpic expansion is carried out by the expansion valve 13 to change the low temperature/high pressure working fluid C to a low temperature/low pressure working fluid D and is presented by the CD line in Fig. 4. $T_2$-$T_3$ corresponds to the supercoiling degree (SC) of the working fluid in the cycle of (i) to (iv), where $T_3$ is the temperature of the low temperature/high pressure working fluid C.

The DA process is a process wherein isobaric heating is carried out in the evaporator 14 to have the low temperature/low pressure working fluid D returned to a high temperature/low pressure working fluid vapor A, and is represented by the DA line in Fig. 4. The pressure in this process is the evaporation pressure. Of the two intersection points of the pressure-enthalpy diagram and the DA line, the intersection point $T_6$ on the high enthalpy side is the evaporation temperature. $T_7$-$T_6$ corresponds to the degree of superheat (SH) of the working fluid in the cycle of (i) to (iv), where $T_7$ is the temperature of the working fluid vapor A. $T_4$ indicates the temperature of the working fluid D.

Here, cycle performance of the working fluid for heat cycle is evaluated, for example, by the refrigerating capacity (hereinafter referred to as "Q" as the case requires) and the coefficient of performance (hereinafter referred to as "COP" as the case requires) of the working fluid for heat cycle. Q and COP of the working fluid for heat cycle are obtained respectively in accordance with the following formulae (1) and (2) from enthalpies $h_A$, $h_B$, $h_C$ and $h_D$ in the respective states A (after evaporation, high temperature and low pressure), B (after compression, high temperature and high pressure), C (after condensation, low temperature and high pressure) and D (after expansion, low temperature and low pressure) of the working fluid for heat cycle.

$$Q = h_A - h_D \quad (1)$$

$$COP = Q/\text{compression work} = (h_A - h_D)/(h_B - h_A) \quad (2)$$

Q represented by $(h_A - h_D)$ corresponds to the output (kW) of the refrigerating cycle, and the compression work represented by $(h_B - h_A)$, for example, an electric energy required to operate the compressor, corresponds to the consumed power (kW). Further, Q means a capacity to freeze a load fluid, and a higher Q means that more works can be done in the same system. In other words, it means that with a working fluid having a higher Q, the desired performance can be obtained with a smaller amount, whereby the system can be downsized.

(Moisture concentration)

A problem such that moisture is included in the heat cycle system may occur. Inclusion of moisture may occur due to freezing in a capillary tube, hydrolysis of the working fluid for heat cycle or the refrigerant oil, deterioration of materials by an acid component formed in the heat cycle, formation of contaminants, etc. Particularly, the above-described polyalkylene glycol oil or polyol ester oil has extremely high moisture absorbing properties and is likely to undergo hydrolysis, and inclusion of moisture decreases properties of the refrigerant oil and may be a great cause to impair the long term reliability of a compressor. Further, in an automobile air-conditioning system, moisture tends to be included from a refrigerant hose used for the purpose of absorbing vibration or a bearing of a compressor. Accordingly, in order to suppress hydrolysis of the refrigerant oil, it is necessary to control the moisture concentration in the heat cycle system.

As a method of controlling the moisture concentration in the heat cycle system, a method of using a desiccating agent (such as silica gel, activated alumina or zeolite) may be mentioned. The desiccating agent is preferably a zeolite desiccating agent in view of chemical reactivity of the desiccating agent and the working fluid for heat cycle, and the moisture absorption capacity of the desiccating agent.

The zeolite desiccating agent is, in a case where a refrigerant oil having a large moisture absorption as compared with a conventional mineral refrigerant oil is used, preferably a zeolite desiccating agent containing a compound represented by the following formula (3) as the main component in view of excellent moisture absorption capacity.

$$M_{2/n}O \cdot Al_2O_3xSiO_2 \cdot yH_2O \quad (3)$$

wherein M is a group 1 element such as Na or K or a group 2 element such as Ca, n is the valence of M, and x and y are values determined by the crystal structure. The pore size can be adjusted by changing M.

To select the desiccating agent, the pore size and the fracture strength are particularly important.

In a case where a desiccating agent having a pore size larger than the molecular size of the working fluid for heat cycle is used, the working fluid for heat cycle is adsorbed in the desiccating agent and as a result, chemical reaction between the working fluid for heat cycle and the desiccating agent will occur, thus leading to undesired phenomena such as formation of non-condensing gas, a decrease in the strength of the desiccating agent, and a decrease in the adsorption capacity.

Accordingly, it is preferred to use as the desiccating agent a zeolite desiccating agent having a small pore size. Particularly preferred is sodium/potassium type A synthetic zeolite having a pore size of at most 3.5 Å. By using a sodium/potassium type A synthetic zeolite having a pore size smaller than the molecular size of the working fluid for heat cycle, it is possible to selectively adsorb and remove only moisture in the heat cycle system without adsorbing the working fluid for heat cycle. In other words, the working fluid for heat cycle is less likely to be adsorbed in the desiccating agent, whereby heat decomposition is less likely to occur and as a result, deterioration of materials constituting the heat cycle system and formation of contaminants can be suppressed.

The size of the zeolite desiccating agent is preferably from about 0.5 to about 5 mm, since if it is too small, a valve or a thin portion in pipelines of the heat cycle system may be clogged, and if it is too large, the drying capacity will be decreased. Its shape is preferably granular or cylindrical.

The zeolite desiccating agent may be formed into an optional shape by solidifying powdery zeolite by a binding agent (such as bentonite). So long as the desiccating agent is composed mainly of the zeolite desiccating agent, other desiccating agent (such as silica gel or activated alumina) may be used in combination.

The amount of the zeolite desiccating agent based on the working fluid for heat cycle is not particularly limited.

(Chlorine concentration)

If chlorine is present in the heat cycle system, it has adverse effects such as formation of a deposit by a reaction with a metal, friction of a bearing, and decomposition of the working fluid for heat cycle or the refrigerant oil.

The chlorine concentration in the heat cycle system is preferably at most 100 ppm, particularly preferably at most 50 ppm by the mass ratio based on the working fluid for heat cycle.

(Non-condensing gas concentration)

If non-condensing gas is included in the heat cycle system, it has adverse effects such as heat transfer failure in the condenser or the evaporator and an increase in the working pressure, and it is necessary to suppress its inclusion as far as possible. Particularly, oxygen which is one of non-condensing gases reacts with the working fluid for heat cycle or the refrigerant oil and promotes their decomposition.

The non-condensing gas concentration is, in a vaporphase portion of the working fluid for heat cycle, preferably at most 1.5 vol%, particularly preferably at most 0.5 vol% by the volume ratio based on the working fluid for heat cycle.

(Advantageous effects)

The above-described heat cycle system, which employs the working fluid for heat cycle of the present invention being excellent in the cycle performance and having a small composition change and a small temperature glide, can be downsized.

Further, the heat cycle system is excellent in the cycle performance since it employs the working fluid for heat cycle of the present invention which can be used as an alternative to R410A.

EXAMPLES

Now, the present invention will be described in further detail with reference to Examples. However, it should be understood that the present invention is by no means restricted to such specific Examples.

(Evaluation of self-decomposition property of HFO-1132(E))

The self-decomposition property was evaluated in accordance with method A recommended as equipment for measurement of the combustion range of a gas mixture containing halogen, by individual notifications in High Pressure Gas Safety Act.

Specifically, each of working fluids for heat cycle prepared by mixing HFO-1132(E) and HFC-32 or HFC-125 in various proportions, was enclosed in a spherical pressure resistant reactor having an internal capacity of 650 cm$^3$ and having a temperature controlled to a predetermined temperature from the outside, to a predetermined pressure, and a platinum wire placed in the inside was fused to apply an energy of about 30J. Temperature and pressure changes in the pressure resistant reactor after application were measured to confirm whether the working fluid had self-decomposition property or not. In a case where a pressure increase and a temperature increase were confirmed, such a working fluid was evaluated to have self-decomposition property. The results are shown in Table 3. The pressure in Table 3 is the gauge pressure.

TABLE 3

| Working fluid for heat cycle [mass%] | | | Pressure [MPaG] | | Temperature [°C] | | Self-decomposition property |
|---|---|---|---|---|---|---|---|
| HFO-1132(E) | HFC-32 | HFC-125 | Before ignition | After ignition | Before ignition | After ignition | |
| 100 | 0 | 0 | 0.98 | 4.8 | 250 | 291 | Observed |
| 80 | 20 | 0 | 0.98 | 1.0 | 250 | 250 | Nil |
| 80 | 0 | 20 | 0.98 | 1.0 | 250 | 250 | Nil |

As evident from Table 3, the working fluid for heat cycle having a composition comprising at most 80 mass% of HFO-1132(E) was confirmed to have no self-decomposition property.

[Ex. 1]

(Evaluation of refrigerating cycle performance)

With respect to working fluids 1 to 28 for heat cycle comprising the present azeotropic-like composition having proportions as identified in Tables 4 to 6, the cycle performance was evaluated as follows. The refrigerating cycle performance (refrigerating capacity and coefficient of performance) was evaluated as the cycle performance (capacity and efficiency) in a case where each of the working fluids 1 to 28 for heat cycle was applied to a refrigerating cycle system 10 shown in Fig. 3, and a heat cycle as shown in Fig. 3, that is, adiabatic compression by a compressor 11 in the AB process, isobaric cooling by a condenser 12 in the BC process, isenthalpic expansion by an expansion valve 13 in the CD process, isobaric heating in an evaporator 14 in the DA process, were carried out.

The evaluation was conducted under the temperature conditions such that the average evaporation temperature of the working fluid for heat cycle in the evaporator 14 was 0°C, the average condensing temperature of the working fluid for heat cycle in the condenser 12 was 40°C, the supercooling degree of the working fluid for heat cycle in the condenser 12 was 5°C, and the degree of superheat of the working fluid for heat cycle in the evaporator 14 was 5°C. Further, it was assumed that there was no loss in the equipment efficiency and no pressure loss in the pipelines and heat exchanger.

The refrigerating capacity and the coefficient of performance were obtained in accordance with the above formulae (1) and (2) from enthalpies h in the respective states of the working fluid for heat cycle, i.e. A (after evaporation, high temperature and low pressure), B (after compression, high temperature and high pressure), C (after condensation, low temperature and high pressure) and D (after expansion, low temperature and low pressure).

The thermodynamic properties required for calculation of the refrigerating cycle performance were calculated based on the generalized equation of state (Soave-Redlich-Kwong equation) based on the law of corresponding state and various thermodynamic equations. If a characteristic value was not available, it was calculated employing an estimation technique based on a group contribution method.

The relative performance (working fluid for heat cycle/R410A) of the refrigerating cycle performance (refrigerating capacity and coefficient of performance) of each of the working fluids 1 to 28 for heat cycle based on R410A, was obtained based on the refrigerating cycle performance of R410A. The results are shown in Tables 4 to 6 together with the compositions of the working fluids 1 to 28 for heat cycle. Further, the relative performance and the global warming potential (GWP) (100 years), in Intergovernmental Panel on Climate Change (IPCC), Fourth assessment report (2007), of each of R410A, HFO-1132(E), HFC-32 and HFC-125 by themselves are shown in Table 7. GWP of HFO-1132(E) is a value assumed to be measured in accordance with IPCC, Fourth assessment report.

TABLE 4

| | Working fluid for heat cycle [mass%] | | Temperature glide | Relative performance (based on R410A) | |
|---|---|---|---|---|---|
| | HFO-1132(E) | HFC-32 | | Coefficient of performance | Refrigerating capacity |
| 1 | 10 | 90 | 0.11 | 1.000 | 1.125 |
| 2 | 20 | 80 | 0.06 | 0.994 | 1.133 |
| 3 | 30 | 70 | 0.00 | 0.990 | 1.134 |
| 4 | 40 | 60 | 0.06 | 0.989 | 1.126 |

(continued)

| | Working fluid for heat cycle [mass%] | | Temperature glide | Relative performance (based on R410A) | |
|---|---|---|---|---|---|
| | HFO-1132(E) | HFC-32 | | Coefficient of performance | Refrigerating capacity |
| 5 | 50 | 50 | 0.29 | 0.989 | 1.108 |
| 6 | 60 | 40 | 0.67 | 0.992 | 1.081 |
| 7 | 70 | 30 | 1.07 | 0.997 | 1.045 |
| 8 | 80 | 20 | 1.31 | 1.004 | 1.001 |
| 9 | 90 | 10 | 1.09 | 1.015 | 0.949 |

TABLE 5

| | Working fluid for heat cycle [mass%] | | Temperature glide | Relative performance (based on R410A) | |
|---|---|---|---|---|---|
| | HFO-1132(E) | HFC-125 | | Coefficient of performance | Refrigerating capacity |
| 11 | 10 | 90 | 0.27 | 0.942 | 0.796 |
| 12 | 20 | 80 | 0.15 | 0.949 | 0.838 |
| 13 | 30 | 70 | 0.03 | 0.959 | 0.868 |
| 14 | 40 | 60 | 0.01 | 0.970 | 0.890 |
| 15 | 50 | 50 | 0.11 | 0.982 | 0.903 |
| 16 | 60 | 40 | 0.26 | 0.993 | 0.909 |
| 17 | 70 | 30 | 0.39 | 1.003 | 0.909 |
| 18 | 80 | 20 | 0.42 | 1.012 | 0.905 |
| 19 | 90 | 10 | 0.31 | 1.020 | 0.897 |

TABLE 6

| | Working fluid for heat cycle [mass%] | | | Temperature glide | Relative performance (based on R410A) | |
|---|---|---|---|---|---|---|
| | HFO-1132(E) | HFC-32 | HFC-125 | | Coefficient of performance | Refrigerating capacity |
| 20 | 10 | 10 | 80 | 0.44 | 0.958 | 0.861 |
| 21 | 10 | 80 | 10 | 0.13 | 1.000 | 1.109 |
| 22 | 20 | 20 | 60 | 0.35 | 0.971 | 0.952 |
| 23 | 30 | 40 | 40 | 0.24 | 0.985 | 1.034 |
| 24 | 40 | 60 | 20 | 0.12 | 0.992 | 1.092 |
| 25 | 50 | 20 | 40 | 0.30 | 0.981 | 0.994 |
| 26 | 60 | 40 | 20 | 0.21 | 0.987 | 1.070 |
| 27 | 70 | 20 | 20 | 0.74 | 0.993 | 1.007 |
| 28 | 80 | 10 | 10 | 1.03 | 1.008 | 0.956 |

TABLE 7

| | Relative performance (based on R410A) | | GWP |
|---|---|---|---|
| | Coefficient of performance | Refrigerating capacity | |
| R410A | 1.000 | 1.000 | 2090 |

(continued)

| | Relative performance (based on R410A) | | GWP |
| --- | --- | --- | --- |
| | Coefficient of performance | Refrigerating capacity | |
| HFC-32 | 1.009 | 1.109 | 675 |
| HFC-125 | 0.941 | 0.742 | 3500 |
| HFO-1132(E) | 1.027 | 0.887 | At most 10 |

It was found from the results in Tables 4 to 6 that the working fluid for heat cycle comprising an azeotropic-like composition consisting of HFO-1132(E) and HFC-32 and/or HFC-125 has a small temperature glide. Further, such a working fluid is found to have a coefficient of performance and a refrigerating capacity equal to or higher than those of a working fluid consisting of R410A.

Further, GWP of a mixture is represented by a weighted average by the composition mass. For example, GWP of a mixture of HFO-1132(E) and HFC-32 in a mass ratio of 1:1 may be calculated as (10+625)/2=317. In such a manner, GWP of a working fluid for heat cycle having a composition as identified in Tables 4 to 6 can be calculated from values shown in Table 7, and it is found that the working fluid for heat cycle of the present invention can have a lower GWP as compared with a working fluid composed of R410A, by selecting the composition.

The working fluid for heat cycle of the present invention is useful as a working fluid such as a refrigerant for a refrigerating apparatus, a refrigerant for an air-conditioning apparatus, a working fluid for a power generation system (such as exhaust heat recovery power generation), a working fluid for a latent heat transport apparatus (such as a heat pipe) or a secondary cooling fluid.

The entire disclosure of Japanese Patent Application No. 2014-118164 filed on June 6, 2014 including specification, claims, drawings and summary is incorporated herein by reference in its entirety.

REFERENCE SYMBOLS

10: refrigerating cycle system, 11: compressor, 12: condenser, 13: expansion valve, 14: evaporator, 15, 16: pump, A, B: working fluid vapor, C, D: working fluid, E, E': load fluid, F: fluid

**Claims**

1.    A working fluid for heat cycle, which contains an azeotropic-like composition consisting of trans-1,2-difluoroethylene, and difluoromethane and/or pentafluoroethane.

2.    The working fluid for heat cycle according to Claim 1, wherein the azeotropic-like composition is a composition having a relative volatility within a range of 1.00±0.40.

3.    The working fluid for heat cycle according to Claim 1 or 2, wherein the azeotropic-like composition contains trans-1,2-difluoroethylene in an amount of from 1 to 99 mass% and difluoromethane and pentafluoroethane in a total amount of from 99 to 1 mass%.

4.    The working fluid for heat cycle according to any one of Claims 1 to 3, wherein the azeotropic-like composition consists of trans-1,2-difluoroethylene and difluoromethane.

5.    The working fluid for heat cycle according to any one of Claims 1 to 3, wherein the azeotropic-like composition consists of trans-1,2-difluoroethylene and pentafluoroethane.

6.    The working fluid for heat cycle according to any one of Claims 1 to 3, wherein the azeotropic-like composition consists of trans-1,2-difluoroethylene, difluoromethane and pentafluoroethane.

7.    The working fluid for heat cycle according to any one of Claims 1 to 6, wherein the proportion of the azeotropic-like composition is at least 50 mass% based on the entire amount of the working fluid for heat cycle.

8.    The working fluid for heat cycle according to any one of Claims 1 to 7, wherein the proportion of trans-1,2-difluoroethylene is at most 80 mass% based on the entire amount of the working fluid for heat cycle.

9. The working fluid for heat cycle according to any one of Claims 1 to 8, wherein the proportion of trans-1,2-difluoroethylene is at least 20 mass% based on the entire amount of the working fluid for heat cycle.

10. The working fluid for heat cycle according to any one of Claims 1 to 9, which is composed of the azeotropic-like composition.

11. A composition for a heat cycle system, which comprises the working fluid for heat cycle as defined in any one of Claims 1 to 10, and a refrigerant oil.

12. A heat cycle system, which employs the composition for a heat cycle system as defined in Claim 11.

13. The heat cycle system according to Claim 12, which is a refrigerating apparatus, an air-conditioning apparatus, a power generation system, a heat transport apparatus or a secondary cooling machine.

14. The heat cycle system according to Claim 13, which is a room air-conditioner, a store package air-conditioner, a building package air-conditioner, a plant package air-conditioner, a gas engine heat pump, a train air-conditioning system, an automobile air-conditioning system, a built-in showcase, a separate showcase, an industrial fridge freezer, an ice making machine or a vending machine.

Fig. 1

Gas-liquid equilibrium of HFO-1132(E)+HFC-32

HFO-1132(E) gaseous phase concentration [mass%]

HFO-1132(E) liquid phase concentration [mass%]

Fig. 2

Gas-liquid equilibrium of HFO-1132(E)+HFC-125

HFO-1132(E) gaseous phase concentration [mass%]

HFO-1132(E) liquid phase concentration [mass%]

Fig. 3

Fig. 4

## INTERNATIONAL SEARCH REPORT

| | International application No. |
|---|---|
| | PCT/JP2015/064942 |

**A. CLASSIFICATION OF SUBJECT MATTER**
*C09K5/04*(2006.01)i

According to International Patent Classification (IPC) or to both national classification and IPC

**B. FIELDS SEARCHED**

Minimum documentation searched (classification system followed by classification symbols)
C09K5/04

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2012/157765 A1 (Asahi Glass Co., Ltd.),<br>22 November 2012 (22.11.2012),<br>paragraphs [0026] to [0039], [0050] to [0055];<br>examples (particularly, table 3); claims 1 to 13<br>& US 2014/0077123 A1    & EP 2711407 A1<br>& CN 103547652 A        & RU 2013156342 A | 1-5,7-14<br>6 |
| A | CN 102994052 A (Chao XU),<br>27 March 2013 (27.03.2013),<br>entire text<br>(Family: none) | 1-14 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 August 2015 (11.08.15) | 25 August 2015 (25.08.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.

PCT/JP2015/064942

C (Continuation).  DOCUMENTS CONSIDERED TO BE RELEVANT

| Category* | Citation of document, with indication, where appropriate, of the relevant passages | Relevant to claim No. |
|---|---|---|
| A | US 2011/0252801 A1  (E.I.DU PONT NEMOURS AND CO.),<br>20 October 2011 (20.10.2011),<br>claims 1 to 19; examples 1 to 2<br>(Family: none) | 1-14 |

Form PCT/ISA/210 (continuation of second sheet) (July 2009)

## REFERENCES CITED IN THE DESCRIPTION

**Patent documents cited in the description**

- JP 4110388 A
- JP 2006512426 A
- WO 2012157765 A
- US 4249412 A
- JP 10502737 A

- JP 2007511645 A
- JP 2008500437 A
- JP 2008531836 A
- JP 2014118164 A